# EUROPÄISCHE PATENTSCHRIFT

(11) **EP 3 676 187 B1**
(45) Veröffentlichungstag und Bekanntmachung des Hinweises auf die Patenterteilung: **03.04.2024**
(21) Anmeldenummer: 18755469.6
(22) Anmeldetag: 15.08.2018
(51) Int. Cl.: B65C 9/18

(54) **VORRICHTUNG ZUR ETIKETTIERUNG VON BEHÄLTERN**
DEVICE FOR LABELLING CONTAINERS
DISPOSITIF POUR ÉTIQUETER DES RECIPIENTS

(30) Priorität: 30.08.2017 DE 102017119943
(43) Veröffentlichungstag der Anmeldung: 08.07.2020
(73) Patentinhaber: KHS GmbH, 44143 Dortmund (DE)
(72) Erfinder: DECKERT, Lutz, 45721 Haltern am See (DE)
(86) Internationale Anmeldenummer: PCT/EP2018/072121
(87) Internationale Veröffentlichungsnummer: WO 2019/042776

(56) Entgegenhaltungen:
- EP-A1- 2 711 303
- EP-A1- 2 837 572
- US-A- 5 486 253

## Beschreibung

Die Erfindung bezieht sich auf eine Vorrichtung zur Etikettierung von Behältern gemäß Oberbegriff Patentanspruch 1.

Etikettenzuführvorrichtungen sind dem Fachmann bereits in den unterschiedlichsten Ausführungsvarianten aus dem Stand der Technik bekannt. Dabei wird in der Regel durch eine Etikettenbandzuführung ein fortlaufendes Etikettenband bereitgestellt. Auf dem fortlaufenden Etikettenband sind aneinanderhängend eine Vielzahl von Etiketten vorgesehen, wobei aus dem Etikettenband durch Zerschneiden Einzeletiketten gebildet werden. Das Etikettenband wird mit einer Teillänge über zumindest eine erste Transfereinrichtung, vorzugsweise einen Vakuumzylinder, und zumindest eine zweite Transfereinrichtung, vorzugsweise eine Vakuumtrommel, geführt. Die Transfereinrichtungen sind hierbei somit als rotativ angetriebene Transfertrommeln ausgebildet, so dass eine Umlenkung, beispielsweise eine S-förmige Umlenkung des Etikettenbandes erfolgt.

Die Transfereinrichtungen sind ferner zur Bewirkung von Halte- bzw. Fixierkräften auf gegenüber diesen Transfereinrichtungen anliegende Teillängen des Etikettenbandes ausgebildet und dabei derart angetrieben, dass das Etikettenband gegenüber diesen Transfereinrichtungen einen Schlupf aufweist. Dadurch wird eine Spannung am freien Ende des Etikettenbandes bewirkt. Dieses freie Ende wird nach einem gewissen Vorschub mit einer bestimmten Länge durch eine Schneideinrichtung abgetrennt, wobei die Abtrennung derart erfolgt, dass das abgetrennte Teilstück ein auf einem Behälter anzubringendes Etikett bildet. Die Halte- bzw. Fixierkräfte an den Transferneinrichtungen werden mittels eines Vakuums erzeugt.

Üblicherweise besitzt der Vakuumzylinder hierfür an seiner äußeren, zylinderförmigen Oberfläche Bohrungen. Diese Bohrungen erstrecken sich von der Oberfläche im Wesentlichen radial in das Innere des Vakuumzylinders und sind so lang ausgeführt, dass diese Bohrungen einen innen liegenden, mit Vakuum beaufschlagbaren Kanal erreichen und somit das Vakuum an die Oberfläche der Vakuumzylinder leiten.

An der Oberfläche der Vakuumzylinder kann das Etikettenband und/oder die Einzeletiketten durch die Kraftwirkung des Unterdruckes an die Zylinderfläche angesaugt werden. Gemäß dem Stand der Technik wird der Unterdruck dabei von einer einzigen Vakuumerzeugungseinrichtung bereitgestellt und über ein Vakuumverteilersystem, umfassend Schläuche und Rohre an die einzelnen Vakuumverbraucher, also beispielsweise an den Vakuumzylinder und/oder die Vakuumtrommel verteilt. Bei der Vakuumerzeugungseinrichtung kann es sich vorzugsweise um einen ein- bzw. zwei-stufigen Seitenkanalverdichter handeln.

Dabei rotieren während des Betriebs der Vorrichtung zur Etikettierung von Behältern sowohl der Vakuumzylinder, als auch Vakuumtrommel jeweils um ihre Hochachsen, wobei ihre Umfangsgeschwindigkeiten stets höher sind, als die Zufuhrgeschwindigkeit des Etikettenbandes. Somit wird das Etikettenband durch einen Zuförderer gegenüber den umlaufenden Flächen zurückgehalten, woraus sich zwingend ergibt, dass zumindest zwischen einem Teil der Oberflächen der Vakuumzylinder und dem Etikettenband Schlupf besteht.

Mithin wird das Etikettenband von dem Vakuum an die umlaufenden Zylinderflächen gesaugt, jedoch nicht unbeweglich oder unverrückbar auf der Oberfläche fixiert. Vielmehr findet zwischen Etikettenbahn und Zylinderfläche eine gewollte Relativbewegung statt. Prozessbedingt ist die Umlaufgeschwindigkeit der äußeren Oberflächen der Zylinderflächen stets größer als die Bahngeschwindigkeit des Etikettenbandes. Durch die Reibung zwischen dem Etikett und der umlaufenden Zylinderfläche und den statischen und dynamischen Kräften, die durch das Ansaugen des Etikettenbandes und den geometrischen Bedingungen entstehen, wird das Etikettenband massiv auf Zug belastet.

Diese Zugbeanspruchung führt zu einer Dehnung des Etikettenbandes. Übersteigt diese Dehnung ein bestimmtes, tragbares Maß, so kann es zu Störungen des Etikettierprozesses kommen, was letztlich dazu führt dass die Zugbeanspruchung des Etikettenbandes unerwünscht ist. Dabei ist die Zugbeanspruchung insbesondere abhängig von der Höhe des jeweiligen Vakuums und dabei insbesondere von damit an der jeweiligen Transfereinrichtung erzeugten Halte- und/oder Reibungskräften an dem Etikettenband. In anderen Worten besteht also eine Wechselwirkung zwischen der Höhe des Vakuums, den zwischen Etikettenband und umlaufenden Oberflächen auftreten Reibungskräften und der daraus resultierenden Dehnungen des Etikettenbandes. Einerseits muss das Vakuum stets hoch genug sein, damit die Etiketten während des gesamten Etikettierprozesses sicher in ihrer jeweiligen SollPosition gehalten werden, andererseits darf es ein gewisses Maß nicht übersteigen, so dass das Etikettenband nicht unzulässig gedehnt wird.

Auch gilt es zu berücksichtigen, dass sich die Eigenschaften des Etikettenbandes von Charge zu Charge, aber auch bereits von Rolle zu Rolle erheblich ändern können (Reibungskoeffizienten, Elastizitätsmodul), was nach sich zieht, dass eine Anpassung der Höhe des Vakuums und dessen genaue Einhaltung über einen längeren Zeitraum für einen auch weiterhin problemlosen Etikettierprozess unabdingbar notwendig sind.

Das Einstellen der einzelnen Komponenten des einen einzigen Vakuumverteilersystems, das das Vakuumsystem ausbildet, erfolgt gemäß dem Stand der Technik über entsprechende Armaturen, beispielsweise über Ventile, Drosseln, Klappen usw., die entweder den Querschnitt der Vakuumleitung verengen oder eine Öffnung zur Umgebungsluft öffnen, um das Vakuum durch Hinzufügen von Umgebungsluft zu reduzieren. Zum Einstellen des Verteilsystems können auch mehrere Maßnahmen kombiniert werden.

Dadurch, dass alle bzw. mehrere Vakuumzylinder sowie die Vakuumtrommel mit ihren Einstellarmaturen in dem einen einzigen Vakuumverteilersystem zusammengefasst sind, verändern sich die Drücke aller Vakuumzylinder sowie der Vakuumtrommel, wenn an einer Stelle eine Einstellung geändert wird. Kleinste Änderungen an einer Stelle des Vakuumverteilsystems führen zwangsläufig zu größeren oder kleineren Änderungen an anderen Stellen des Vakuumverteilsystems. Eine genaue Einstellung eines solchen Vakuumverteilsystems ist schwierig bis nahezu unmöglich, auf jeden Fall aber langwierig und teuer.

Die Druckschrift EP 2 837 572 A1 offenbart ein Etikettieraggregat zum Aufbringen von Etiketten auf Behälter gemäß dem Oberbegriff des Anspruchs 1.

Die Druckschrift US 5,486,253 A offenbart eine Vakuumtrommel zum Etikettieren von Behältern mit mehreren Vakuumbereichen.

Ausgehend hiervon liegt der vorliegenden Erfindung die Aufgabe zu Grunde, eine Vorrichtung zur Etikettierung von Behältern bereitzustellen, die die vorgenannten Nachteile vermeidet, die zudem einfach aufgebaut ist und insbesondere eine einfache und zuverlässige Einstellung sowie Anpassung der Unterdruckverhältnisse an den Transfereinrichtung ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt gemäß der Erfindung besteht dabei darin, eine Vorrichtung zur Etikettierung von Behältern bereitzustellen, umfassend eine Etikettenbandzuführung und zumindest eine Vakuumtrommeleinheit, bei der die Etikettenbandzuführung zur Zuführung zumindest eines eine Vielzahl von Einzeletiketten aufweisenden Etikettenbandes an die zumindest eine Vakuumtrommeleinheit ausgebildet ist, wobei die Etikettenbandzuführung zumindest einen ersten um eine Zylinderhochachse rotierenden Vakuumzylinder aufweist, an dessen Außenmantelfläche zumindest teilumfänglich eine Teillänge des Etikettenbandes zur Anlage gelangt und dort unter Beaufschlagung mittels eines Vakuums gehalten wird, und wobei die Etikettenbandzuführung zumindest eine Schneideinrichtung zum Vereinzeln des Etikettenbandes in Einzeletiketten aufweist, wobei die zumindest eine Vakuumtrommeleinheit zum Aufnehmen der vom ersten Vakuumzylinder bereitgestellten Einzeletiketten, zum Halten der aufgenommenen Einzeletiketten an Außenmantelfläche der Vakuumtrommeleinheit und zum Transport dessen in Förderrichtung jeweils durch Beaufschlagung mittels Vakuum ausgebildet ist, und wobei zumindest eine erste und zweite Vakuumerzeugungseinrichtung vorgesehen sind, wobei die erste Vakuumerzeugungseinrichtung zur Bereitstellung von Vakuum zumindest an der Vakuumtrommeleinheit und die zweite Vakuumerzeugungseinrichtung zur Bereitstellung von Vakuum zumindest an dem ersten Vakuumzylinders ausgebildet ist. Erfindungsgemäß ist dabei vorgesehen, dass der wenigstens eine Vakuumzylinder an seiner rotierenden Außenmantelfläche drehwinkelabhängig einen ersten Vakuumbereich sowie zumindest einen davon getrennten zweiten Vakuumbereich ausbildet und dass der erste Vakuumbereich zur Beaufschlagung mit einem ersten Unterdruck und der zweite Vakuumbereich zur Beaufschlagung mit einem zum ersten Unterdruck unterschiedlichen zweiten Unterdruck ausgebildet ist.

Unterschiedlich zum Stand der Technik sieht die erfindungsgemäße Vorrichtung zur Etikettierung also nicht ein einziges, gemeinsames Vakuumverteilungssystem mit nur einer einzige Vakuumerzeugungseinrichtung sowohl für den zumindest einen Vakuumzylinder als auch die Vakuumtrommel vor, sondern löst dieses eine Vakuumverteilungssystem gewissermaßen in mehrere, zumindest zwei autarke Vakuumsystem auf und schlägt vor, dass zumindest eine erste und zweite Vakuumerzeugungseinrichtung vorgesehen sind, wobei die erste Vakuumerzeugungseinrichtung zur Bereitstellung von Vakuum zumindest an der Vakuumtrommeleinheit und die zweite Vakuumerzeugungseinrichtung zur Bereitstellung von Vakuum zumindest an dem ersten Vakuumzylinders ausgebildet ist. Indem sowohl die Vakuumtrommel als auch der wenigstens eine Vakuumzylinder jeweils eine eigenständige Vakuumerzeugungseinrichtung aufweist, können diese Komponenten bzw. Baugruppen entsprechend zielgerichtet und einfach mit gleichen oder unterschiedlichen Vakuumverhältnissen beaufschlagt werden. Eine Anpassung an sich ändernde äußere Verhältnisse, sei es bei einem Wechsel des Etikettenbandes oder aber auch einer Charge, ist durch die Zuordnung einer jeweils eigenständigen Vakuumerzeugungseinrichtung sowohl für den wenigstens einen Vakuumzylinder als auch die Vakuumtrommel besonders einfach möglich.

Insbesondere kann damit jeder Vakuumzylinder oder die Vakuumtrommel unabhängig eingestellt werden. Da erfindungsgemäß nunmehr quasi autarke Vakuumerzeugereinrichtungen als separate Einheiten vorliegen, können die für die jeweilige Einheit vorgesehenen Vakuumerzeugereinrichtungen optimiert, d.h. gesteigert bedarfsgerecht ausgewählt werden. Beispielsweise benötigen einige Vakuumverbraucher, d.h. insbesondere der Vakuumzylinder oder die Vakuumtrommel, einen vergleichsweise großen Volumenstrom bei kleinem Unterdruck, wohingegen andere Vakuumverbraucher einen im Vergleich dazu großen Unterdruck bei gleichzeitig kleinem Volumenstrom erfordern. Durch die gesteigert bedarfsgerechte Auslegung der Vakuumerzeugereinrichtungen kann jede einzelne Vakuumerzeugereinrichtung für sich betrachtet, aber auch alle Vakuumerzeugereinrichtungen in der Gesamtbetrachtung viel kleiner ausgewählt werden, wodurch in der Regel die Anschaffungskosten, auf jeden Fall aber die regelmäßigen Betriebs- und/oder Energiekosten reduziert werden können. Überdies entfallen die teuren, mechanischen Einstellarmaturen da die Vakuumerzeugereinrichtungen elektrisch steuer- und/oder regelbar ausgebildet sein können.

Letztlich reduzieren sich dadurch die Formatwechselzeiten, da die Regel- und Einstell-Parameter formatabhängig in einer Maschinensteuerung abgespeichert werden können und bei einem Formatwechsel durch Abruf durch das Bedienungspersonal in der Maschinensteuerung nur mehr aktiviert werden müssen. Im Vergleich dazu müssen derzeit im Stand der Technik alle mechanischen Einstellarmaturen in die entsprechenden Stellungen gebracht werden, was überaus zeitaufwändig und somit teuer ist.

Gemäß einer vorteilhaften Ausführungsvariante ist vorgesehen, dass die erste und zweite Vakuumerzeugungseinrichtung unabhängig voneinander und/oder auf einem jeweils unterschiedlichen Unterdruckniveau zueinander betreibbar sind.

Gemäß einer weiteren vorteilhaften Ausführungsvariante ist vorgesehen, dass die Vakuumtrommeleinheit wenigstens zwei, an der Vakuumtrommeleinheit um eine Trommelhochachse versetzt vorgesehene und um die Trommelhochachse rotierbare Vakuumhalter aufweist, an denen die abgetrennten Einzeletiketten mittels des Vakuums gehalten werden.

Gemäß einer nochmals weiteren vorteilhaften Ausführungsvariante ist vorgesehen, dass die erste Vakuumerzeugungseinrichtung mit der zumindest einen Trommeleinheit ein erstes Vakuumsystem und der zumindest eine Vakuumzylinder mit der wenigstens einen zweiten Vakuumerzeugungseinrichtung ein zweites Vakuumsystem ausbildet.

Gemäß einer nochmals weiteren vorteilhaften Ausführungsvariante ist vorgesehen, dass das erste und zweite Vakuumsystem unabhängig voneinander mittels einer gemeinsamen Steuereinheit steuer- und/oder regelbar ausgebildet ist.

Gemäß einer nochmals weiteren vorteilhaften Ausführungsvariante ist vorgesehen, dass das erste Vakuumsystem wenigstens einen Drucksensor und/oder das zweite Vakuumsystem wenigstens einen Drucksensor aufweist.

Gemäß einer nochmals weiteren vorteilhaften Ausführungsvariante ist vorgesehen, dass der wenigstens eine Vakuumzylinder des ersten Vakuumsystems wenigstens einen Drehwinkelgeber und/oder die wenigstens eine Vakuumtrommeleinheit des ersten Vakuumsystems einen Drehwinkelgeber aufweist.

Gemäß einer nochmals weiteren vorteilhaften Ausführungsvariante ist vorgesehen, dass eine in der Steuereinheit vorgesehene Prozesseinheit dazu eingerichtet sein, Ist-Steuerdaten aus der Drehzahl und/oder der Drehrichtung und/oder der Drehgeschwindigkeit und/oder erfassten Ist-Druckwert, in dem wenigstens einen ersten und zweiten Vakuumsystem zu ermitteln, um daraus abgeleitet die erste und/oder zweite Vakuumerzeugungseinrichtung mit der erforderlichen Vakuum- oder Saugleistung zu betreiben.

Gemäß einer nochmals weiteren vorteilhaften Ausführungsvariante ist vorgesehen, dass der erste sowie zumindest ein zweiter Vakuumzylinder vorgesehen ist, die mit einer gemeinsamen zweiten Vakuumerzeugungseinrichtung mit Vakuum beaufschlagbar sind, derart, dass der erste sowie der zumindest eine zweiter Vakuumzylinder das zweite Vakuumsystem ausbilden.

Gemäß einer nochmals weiteren vorteilhaften Ausführungsvariante ist vorgesehen, dass der erste sowie der zumindest eine zweite Vakuumzylinder jeweils mit einer separaten Vakuumerzeugungseinrichtung mit Vakuum beaufschlagbar ist, derart, dass der erste Vakuumzylinder das zweite Vakuumsystem und der wenigstens eine dritte Vakuumzylinder ein drittes Vakuumsystem ausbildet.

Gemäß einer nochmals weiteren vorteilhaften Ausführungsvariante ist vorgesehen, dass die zumindest eine erste und/oder zweite Vakuumerzeugungseinrichtung als elektrisch angetriebene Vakuumpumpe ausgebildet ist, wobei wiederum besonders bevorzugt Seitenkanalverdichter oder Radialgebläse als Vakuumpumpen eingesetzt werden.

Gemäß einer nochmals weiteren vorteilhaften Ausführungsvariante ist vorgesehen, dass die zumindest eine erste und/oder zweite Vakuumerzeugungseinrichtung als elektrisch angetriebene Vakuumpumpe, insbesondere Seitenkanalverdichter, ausgebildet ist.

Gemäß einer nochmals weiteren vorteilhaften Ausführungsvariante ist vorgesehen, dass der wenigstens eine Vakuumzylinder an seiner rotierenden Außenmantelfläche drehwinkelabhängig zumindest einen ersten Vakuumbereich zur Beaufschlagung mit wenigstens einem ersten Unterdruck ausbildet.

Erfindungsgemäß ist vorgesehen, dass der erste Vakuumbereich mit der zweiten Vakuumerzeugungseinrichtung und der zweite Vakuumbereich mit einer dritten Vakuumerzeugungseinrichtung mit Vakuum beaufschlagbar sind.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

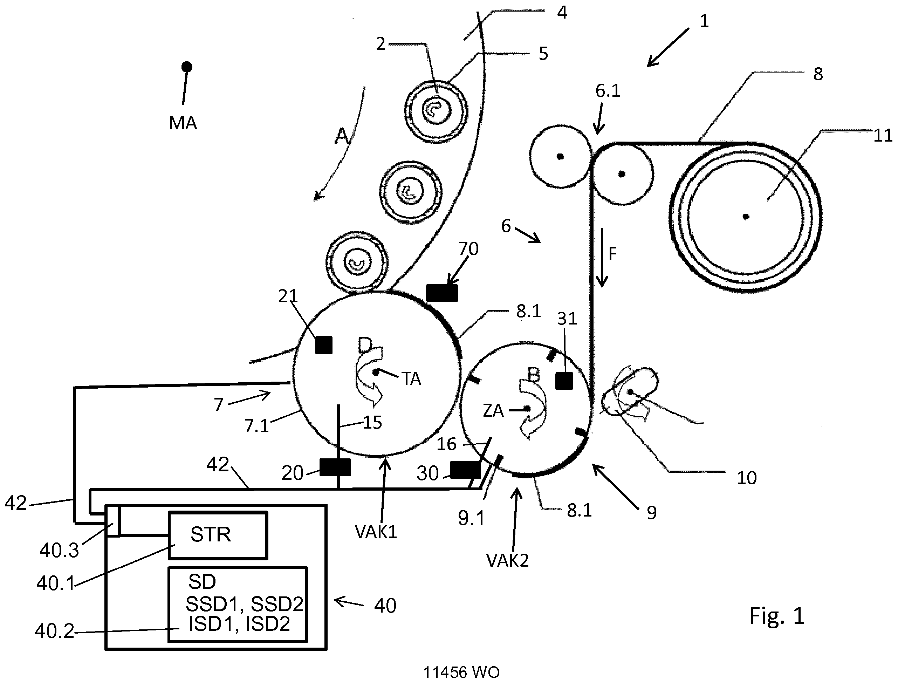

- Fig. 1: eine schematische Blockansicht einer beispielhaften Ausführungsvariante einer Vorrichtung zur Etikettierung von Behältern,
- Fig. 2: eine schematische Perspektivansicht einer weiteren Ausführungsvariante einer Vorrichtung zur Etikettierung von Behältern,
- Fig. 3: eine schematische Draufsicht auf eine Vorrichtung zur Etikettierung von Behältern gemäß Ausführungsvariante der Figur 2,
- Fig. 4: eine schematische Draufsicht auf eine Ausführungsvariante eines freigestellten Vakuumzylinders, und
- Fig. 5: eine schematische Draufsicht einer weiteren Ausführungsvariante eines freigestellten Vakuumzylinders.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die in den Figuren allgemein mit 1 bezeichnete Vorrichtung dient zur Etikettierung von Behältern 2, insbesondere von Flaschen, und ist bevorzugt als Etikettiermaschine umlaufender Bauart ausgebildet.

Die Vorrichtung 1 wirkt in der dem Fachmann bekannten Weise u. a. mit einem um eine vertikale Maschinenachse MA in Richtung des Pfeils A (im Uhrzeigersinn) umlaufend angetriebenen Rotor 4 zusammen, der jedoch nicht Bestandteil der Vorrichtung 1 ist, und der an seinem Umfang eine Vielzahl von Behälterträgern 5 in Form von Drehtellern aufweist.

Auf den Drehtellern 5 ist während des Etikettierbetriebs jeweils ein Behälter 2 aufrecht stehend, d. h. mit seiner Behälterhochachse in vertikaler Richtung parallel oder im Wesentlichen parallel zur Maschinenachse MA orientiert angeordnet. Die zu etikettierenden Behälter 2 werden dem Rotor 4 an einem nicht dargestellten Behältereinlauf zugeführt und verlassen diesen dann nach erfolgter Etikettierung an einem ebenfalls nicht dargestellten Behälterauslauf.

Zum Etikettieren werden die auf den Drehtellern 5 aufrecht stehenden Behälter 2 an der stationär feststehend vorgesehen, also sich mit dem Rotor 4 nicht mitdrehenden, Vorrichtung 1 zur Etikettierung der Behälter 2 vorbei bewegt.

Die erfindungsgemäße Vorrichtung 1 zur Etikettierung von Behältern 2 weist hierfür eine Etikettenbandzuführung 6 und zumindest eine Vakuumtrommeleinheit 7 auf. Die Etikettenbandzuführung 6 ist dabei zur Zuführung zumindest eines eine Vielzahl von Einzeletiketten 8.1 aufweisenden Etikettenbandes 8 an die zumindest eine Vakuumtrommeleinheit 7 ausgebildet.

Ferner weist die Etikettenbandzuführung 6 zumindest einen ersten um eine Zylinderhochachse ZA rotierenden Vakuumzylinder 9 auf, an dessen Außenmantelfläche 9.1 zumindest teilumfänglich eine Teillänge des Etikettenbandes 8 zur Anlage gelangt und dort unter Beaufschlagung mittels eines Vakuums gehalten wird.

Überdies weist die Etikettenbandzuführung 6 zumindest eine Schneideinrichtung 10 zum Vereinzeln des Etikettenbandes 8 in Einzeletiketten 8.1 auf, wobei die zumindest eine Vakuumtrommeleinheit 7 zum Aufnehmen der von dem zumindest einem ersten Vakuumzylinder 9 bereitgestellten Einzeletiketten 8.1, zum Halten der aufgenommenen Einzeletiketten 8.1 an einer Außenmantelfläche 7.1 der Vakuumtrommeleinheit 7 und zum Transport dessen in einer Förderrichtung F jeweils durch Beaufschlagung mittels eines Vakuum ausgebildet ist.

Als Etikettenband 8 ist beispielsweise ein auf einem Vorrat 11 (Etikettenbandrolle) fortlaufendes Band vorgesehen, auf dem eine Vielzahl von durch Schneiden zu vereinzelnden Einzeletiketten 8.1 aufeinanderfolgend, d. h. beispielsweise unmittelbar aufeinanderfolgend oder in einem gewissen Abstand zueinander beabstandet angeordnet sind. Mittels der Etikettenbandzuführung 6, die beispielsweise einen Etikettenbandantrieb 6.1 in Form eines gegenläufig angeordneten Rollenpaares, durch das das Etikettenband 8 hindurchgeführt wird, aufweist, wird das Etikettenband 8 über den zumindest einen Vakuumzylinder 9 sowie die wenigstens eine Vakuumtrommeleinheit 7 geführt.

Das Etikettenband 8 kommt dabei umfangsseitig an dem zumindest einen Vakuumzylinder 9 zur Anlage und umschlingt diesen in einem Teilbereich mit einem vorbestimmbaren Umschlingungswinkel. An dem zumindest einen Vakuumzylinder 9 umfangsseitig anschließend ist die zumindest eine Vakuumtrommeleinheit 7 vorgesehenen, und zwar derart, dass diese um eine Trommelhochachse TA parallel oder im Wesentlichen parallel zur Zylinderhochachse ZA bzw. Maschinenasche MA rotiert. Beispielsweise rotiert der wenigstens eine Vakuumzylinder 9 dabei in Pfeilrichtung B, also im Uhrzeigersinn, während sich die zumindest eine Vakuumtrommeleinheit 7 dazu gegensinnig in Pfeilrichtung D, also gegen den Uhrzeigersinn, dreht. Die Übergabe der Einzeletiketten 8.1 von dem Vakuumzylinder 9 an die Vakuumtrommeleinheit 7 erfolgt dabei derart, dass das in Förderrichtung F vorauseilende Ende des jeweiligen Einzeletiketts 8.1 zuerst zur Anlage an der Vakuumtrommeleinheit 7 gelangt, bevor das in Förderrichtung F nacheilende Ende dieses Einzeletiketts 8.1 den Vakuumzylinder 9 verlässt, also die Halte- bzw. Fixierkräfte an dessen Außenmantelfläche 9.1 gegenüber dem nacheielenden Ende dieses Einzeletiketts 8.1 gelöst werden.

Die Umfangsfläche bzw. die Außenmantelfläche 7.1 der Vakuumtrommeleinheit 7 ist dabei u.a. von wenigstens zwei als Vakuumhalter 7.11, 7.12 vorgesehenen Segmenten gebildet, die in Drehrichtung D um die Trommelhochachse TA versetzt folgen und zueinander beabstandet sind. Jeder segmentförmig ausgebildeter Vakuumhalter 7.11, 7.12 dient beispielsweise zur Aufnahme eines Einzeletiketts 8.1, und zwar in der Weise, dass das Einzeletikett 8.1 mit seiner nach dem Aufbringen auf den betreffenden Behälter 2 sichtbaren Vorderseite gegen die Außenfläche des Vakuumhalters 7.11, 7.12 anliegt und dort mit Unterdruck bzw. Vakuum gehalten wird. Hierfür sind an jeder Außenfläche eines entsprechenden Vakuumhalters 7.11, 7.12, die einen Kreissegmentabschnitt der Außenmantelfläche 7.1 ausbilden, eine Vielzahl von Öffnungen vorgesehen, die gesteuert und/oder geregelt zumindest auf einem Winkelbereich zwischen der Übergabe der Einzeletiketten 8.1 an die Vakuumtrommeleinheit 7 bis zur Übergabe der Einzeletiketten 8.1 an die Behälter 2 mit einem Unterdruck beaufschlagbar sind. Die Vakuumtrommeleinheit 7 weist also wenigstens zwei, an der Vakuumtrommeleinheit 7 um die Trommelhochachse TA versetzt vorgesehene und um die Trommelhochachse TA rotierbare Vakuumhalter 7.11, 7.12 auf, an denen die abgetrennten Einzeletiketten 4 unter Beaufschlagung mittels eines Vakuums gehalten werden können.

Der Etikettenbandantrieb 6.1 der Etikettenbandzuführung 6 bewirkt einen Transport des Etikettenbandes 8 von einem Vorrat 11 mit einer ersten Geschwindigkeit V1, die unterschiedlich ist einer zweiten und/oder einer dritten Geschwindigkeit V2, V3 ausgebildet sein kann, die also die wenigstens eine Vakuumtrommeleinheit 7 bzw. der wenigstens ein Vakuumzylinder 9 aufweisen kann. Dabei wird der wenigstens eine Vakuumzylinder 9 mit der zweiten Geschwindigkeit V2 und die wenigstens eine Vakuumtrommeleinheit 7 mit der dritten Geschwindigkeit V3 betrieben.

Mehr im Detail kann vorgesehen sein, dass die erste Geschwindigkeit V1 kleiner als die zweite und/oder dritte Geschwindigkeit V2, V3 ausgebildet ist. Vorzugsweise kann die dritte Geschwindigkeit V3 größer oder gleich der zweiten Geschwindigkeit V2 ausgebildet sein.

Damit wird eine Rückhaltekraft derart auf das Etikettenband 8 erzeugt, dass das Etikettenband 8 lediglich mit der Geschwindigkeit V1 transportiert wird und die Transportgeschwindigkeiten des wenigstens einen Vakuumzylinders 9 bzw. der wenigstens einen Vakuumtrommeleinheit 7 gegenüber der Zuführgeschwindigkeit mittels des Etikettenbandantriebes 6.1 größer ausgebildet sind, so dass zwischen dem wenigstens einen Vakuumzylinder 9 und der Teillänge des Etikettenbandes 4, das außenumfangsseitig an dem wenigstens einen Vakuumzylinder 9 anliegt bzw. zwischen der Teillänge des Etikettenbandes 4, das an der wenigstens einen Vakuumtrommeleinheit 7 anliegt, ein Schlupf entsteht und das Etikettenband 4 hierdurch gespannt wird.

Mit der Schneideinrichtung 10 kann eine gewünschte Teillänge des Etikettenbandes 4 zu einem Einzeletikett 8.1 abgetrennt, insbesondere abschnitten, werden. Unmittelbar vor dem Abtrennen liegt dabei ein erster Teilbereich der abzutrennenden Teillänge des Etikettenbandes 8 an der Außenmantelfläche 9.1 des wenigstens einen Vakuumzylinder 9 und ein zweiter Teilbereich an der Außenmantelfläche 7.1, insbesondere an einem der Vakuumhalter 7.11, 7.12, der wenigstens einen Vakuumtrommeleinheit 7 an. Nach dem Durchtrennen des Etikettenbandes 4 an der gewünschten Stelle mittels der Schneideinrichtung 10 zu einem Einzeletikett 8.1 entfällt die Rückhaltewirkung, die der Etikettenbandantrieb 6.1 auf den gegenüber dem Vakuumzylinder 9 sowie der Vakuumtrommeleinheit 7 anliegenden Teilbereich des Etikettenbandes 8 ausgeübt hat, so dass das abgetrennte Einzeletikett 8.1 mit einer größeren Transportgeschwindigkeit im Vergleich zur Zuführgeschwindigkeit des Etikettenbandantriebs 6.1, vorzugsweise schlupffrei, an eine Leimauftragsvorrichtung 70, wie sie beispielsweise in der DE102006017365A1 nähergehend beschrieben ist, weitertransportiert wird. Das abgetrennte Einzeletikett 8.1 kann dann einer die zu etikettierenden Behälter 2 fördernden Einrichtung, insbesondere dem Rotor 4, weitertransportiert und dort etikettiert werden.

Die zumindest eine Vakuumtrommeleinheit 7 sowie der wenigstens eine Vakuumzylinder 9 sind dabei zur Ansaugung des mit ihnen in Verbindung stehenden, also zur Anlage an deren jeweiligen Außenmantelfläche 7.1, 9.1 gelangenden, Abschnittes des Etikettenbandes 8 und/oder Einzeletiketten 8.1 ausgebildet. Insbesondere kann dies mittels eines Vakuums passieren, mit dem die zumindest eine Vakuumtrommeleinheit 7 sowie der wenigstens eine Vakuumzylinder 9 beaufschlagbar sind, und zwar insbesondere derart, dass durch das Absaugen von Luft durch an der zumindest einen Vakuumtrommeleinheit 7 sowie dem wenigstens einen Vakuumzylinder 9 vorgesehenen Öffnungen aus einem jeweiligen ansonsten geschlossenen Innenraum Halte- bzw. Fixierkräfte auf das Etikettenband 8 und/oder die Einzeletiketten 8.1 ausgeübt werden, die eine Fixierung des Etikettenbandes 8 und/oder der Einzeletiketten 8.1 gegenüber der jeweiligen Vakuumtrommeleinheit 7 sowie dem jeweiligen Vakuumzylinder 9 bewirken.

Das Zusammenwirken der wenigstens einen Vakuumtrommeleinheit 7 mit der Schneideinrichtung 10 ist dem einschlägigen Fachmann beispielsweise aus der DE 10 2007 009 152 A1 oder der DE 10 2007 009 484 A1 bekannt. Erfindungsgemäß sind dabei zumindest eine erste und zweite Vakuumerzeugungseinrichtung 20, 30 vorgesehen, wobei die erste Vakuumerzeugungseinrichtung 20 zur Bereitstellung von Vakuum zumindest an der Vakuumtrommeleinheit 7 und die zweite Vakuumerzeugungseinrichtung 30 zur Bereitstellung von Vakuum zumindest an dem ersten Vakuumzylinders 9 ausgebildet ist. Dabei kann die erste Vakuumerzeugungseinrichtung 20 über eine fluiddichte Verbindungsleitung 15, die beispielsweise als flexible Rohrleitung ausgebildet sein kann, mit der wenigstens einen Vakuumtrommeleinheit 7 und die zweite Vakuumerzeugungseinrichtung 30 über eine fluiddichte Verbindungsleitung 16, die ebenfalls als flexible Rohrleitung ausgebildet sein kann, mit dem wenigstens einen ersten Vakuumzylinder 9 verbunden sein.

Dabei kann die über die fluiddichte Verbindungsleitung 15 mit der ersten Vakuumerzeugungseinrichtung 20 verbundene zumindest eine Vakuumtrommeleinheit 7 ein erstes Vakuumsystem VAK1 und der über die fluiddichte Verbindungsleitung 16 mit der zweiten Vakuumerzeugungseinrichtung 30 verbundene zumindest eine Vakuumzylinder 9 ein zweites Vakuumsystem VAK2 ausbilden. Mehr im Detail kann vorgesehen sein, dass das erste und zweite Vakuumsystem VAK1, VAK2 unabhängig voneinander und/oder auf einem jeweils unterschiedlichen Unterdruckniveau zueinander betreibbar ausgebildet ist. Insbesondere sind damit das erste und zweite Vakuumsystem VAK1, VAK2 autark zueinander ausgebildet.

Die Ansteuerung des ersten und zweiten Vakuumsystems VAK1, VAK2 kann dabei über eine gemeinsame Steuereinheit 40 erfolgen, die beispielsweise die Maschinensteuerung oder ein Teil der Maschinensteuerung der Vorrichtung 1 oder einer die Vorrichtung 1 aufweisenden Anlage, ist. Insbesondere kann das erste und zweite Vakuumsystem VAK1, VAK2 unabhängig zueinander mittels der Steuereinheit 40 gesteuert und/oder geregelt ausgebildet sein. Dabei kann das erste und zweite Vakuumsystem VAK1, VAK2 jeweils wenigstens einen Drucksensor 21, 31 zur Erfassung des in dem jeweiligen ersten und/oder zweiten Vakuumsystems VAK1, VAK2 herrschenden Relativdrucks, insbesondere eines herrschenden Unterdrucks, aufweisen. Insbesondere weist hierfür das erste Vakuumsystem VAK1 den Drucksensor 21 und das zweite Vakuumsystem VAK2 den Drucksensor 31 auf.

Vorteilhaft kann der wenigstens eine Vakuumzylinder 9 und/oder die wenigstens eine Vakuumtrommeleinheit 7 auch einen Drehwinkelgeber 22, 32 zur Erfassung der Rotationsgeschwindigkeit und/oder der Drehrichtung des wenigstens einen Vakuumzylinders 9 und/oder der wenigstens einen Vakuumtrommeleinheit 7 aufweisen. Insbesondere weist hierfür der wenigstens eine Vakuumzylinder 9 des zweiten Vakuumsystems VAK2 den wenigstens einen Drehwinkelgeber 32 und die wenigstens eine Vakuumtrommeleinheit 7 des ersten Vakuumsystems VAK1 den Drehwinkelgeber 22 auf.

Mehr im Detail kann die Ansteuerung des ersten und zweiten Vakuumsystems VAK1, VAK2 durch eine Steuerroutine STR gesteuert erfolgen, die in der Steuereinheit 40 ausgeführt wird. Die Steuereinheit 40 kann hierzu beispielsweise wenigstens eine Prozessoreinheit 40.1 zur Ausführung der Steuerroutine STR aufweisen. Ferner weist die Steuereinheit 40 beispielsweise eine mit der Prozessoreinheit 40.1 zusammenwirkende Speichereinheit 40.2 zum zumindest zeitweisen Speichern von Steuerungsdaten SD auf, die beispielsweise über eine Schnittstelle 40.3 von der Steuereinheit 40 über Steuerleitungen 42 an das erste und zweite erste und zweite Vakuumsystem VAK1, VAK2 übertragen und/oder empfangen werden.

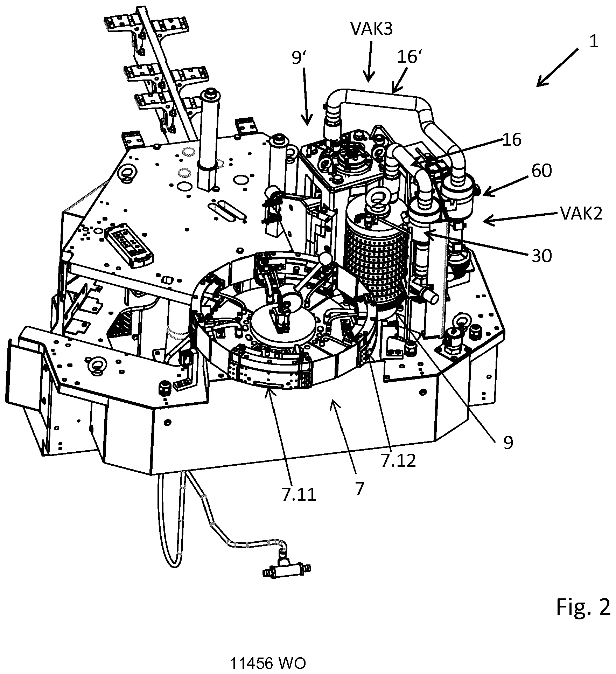

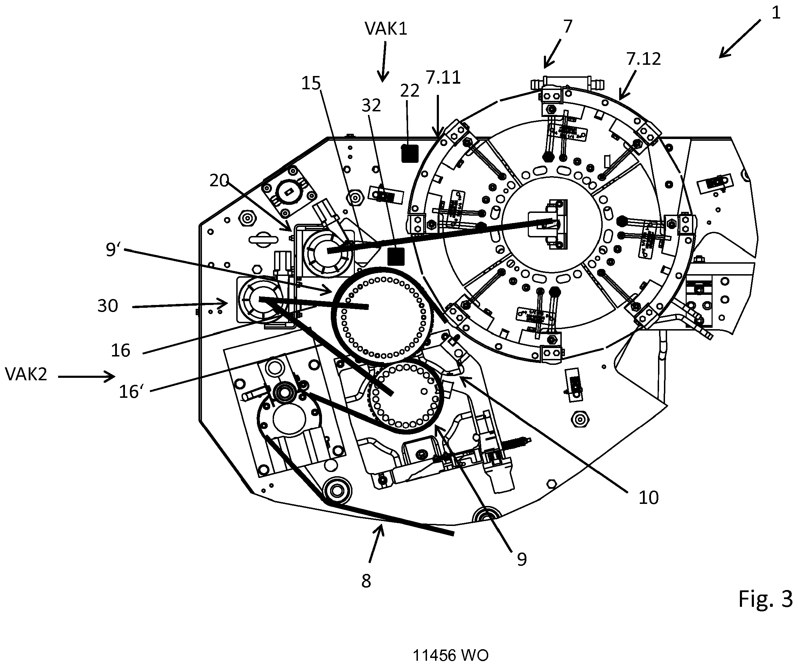

Die Steuerdaten SD umfassen insbesondere aktuell an bzw. in dem ersten und zweiten Vakuumsystem VAK1, VAK2 ermittelte Ist-Steuerdaten ISD1, ISD2 wie beispielsweises eine jeweilige Ist-Drehzahl IDZ1, IDZ2, Ist-Drehrichtung IDR1, DR2, Ist-Drehgeschwindigkeit IDG1, IDG2 sowie Ist-Druckwert ID1, ID2, sowie entsprechende Soll-Steuerdaten SSD1, SSD2 wie beispielsweise eine Soll-Drehzahl SDZ1, SDZ2, Soll-Drehrichtung SDR1, SDR2, Soll-Drehgeschwindigkeit SDG1, SDG2 sowie Soll-Druckwert SD1, SD2. Dabei sind die mit Index 1 versehenen Parameter dem ersten Vakuumsystem VAK1 und die mit dem Index 2 versehenen Parameter dem zweiten Vakuumsystem VAK2 zuzuordnen. Sind dabei in weiteren Ausführungsvarianten, beispielsweise der Ausführungsvariante der Figuren 2 und 3, der Erfindung weitere Vakuumzylinder 9' bzw. Vakuumerzeugungseinrichtungen 60 vorgesehen, so können diese Bauteile ein drittes Vakuumsystem VAK3 oder weiteres viertes, fünftes, etc. Vakuumsystem bilden, für das dann ein entsprechender Parametersatz an Ist- und Soll-Daten mit einem entsprechenden Index 3 als Steuerungsdaten SD in der Steuereinheit 40 hinterlegbar ist.

Insbesondere kann die Prozesseinheit 40.1 dazu eingerichtet sein, die Ist-Steuerdaten ISD aus der Drehzahl und/oder der Drehrichtung und/oder der Drehgeschwindigkeit und/oder dem herrschenden Vakuum, also dem Ist-Druckwert, in dem wenigstens einen ersten und zweiten Vakuumsystem VAK1, VAK2 zu ermitteln, um daraus abgeleitet die erste und/oder zweite Vakuumerzeugungseinrichtung 20, 30 mit der erforderlichen Vakuum- oder Saugleistung [m³/h] zu betreiben, insbesondere die wenigstens eine erste Vakuumtrommeleinheit 7 bzw. den wenigstens einen ersten Vakuumzylinder 9 mit einem ausreichenden Vakuum zu beaufschlagen.

Die Prozessoreinheit 40.1 ist insbesondere dazu eingerichtet, über die Schnittstelle 40.3 empfangene Ist-Steuerdaten ISD mit Soll-Steuerdaten SSD zu vergleichen und abhängig davon in Steuerdaten SD für die Steuerroutine STR umzuwandeln, bzw. Steuerbefehle zu definieren, die an das entsprechende erste und zweite Vakuumsystem VAK1, VAK2 übertragen werden, um die Vorrichtung 1 abhängig von den mittels der Steuerroutine STR erzeugten Steuerdaten SD gesteuert anzutreiben. In der Speichereinheit 40.2 können auch bereits vordefinierte, also vorgegebene, Soll-Steuerdaten SSD für das erste und/oder zweite Vakuumsystem VAK1, VAK2 hinterlegt sein.

Dabei kann vorgesehen sein, dass die Steuereinheit 40 derart ausgebildet ist, dass für jedes mit der erfindungsgemäßen Vorrichtung 1 zu verarbeitendes Etikettenformat ein separater Datensatz an Steuerdaten SD in der Speichereinheit 40.2 hinterlegt ist. Vorzugsweise enthalten die Steuerdaten SD dann auch die Soll-Druckwerte ID1, ID2 zum Betreiben des ersten und/oder zweiten Vakuumsystems VAK1, VAK2.

Dabei kann auch vorgesehen sein, dass die jeweiligen Datensätze an Steuerungsdaten SD vor der Verarbeitung einer anderen Etikettensorte in der Steuereinheit 40 ausgewählt und somit aktiviert wird. Damit können ohne aufwändige manuelle Einstellarbeiten an dem ersten und/oder zweiten Vakuumsystem VAK1, VAK2 die richtigen Druckwerte ID1, ID2, anliegen.

Die Figuren 2 und 3 zeigen dabei eine Ausführungsvariante der erfindungsgemäßen Vorrichtung 1 mit einem weiteren, zweiten Vakuumzylinder 9' sowie einer Vakuumtrommeleinheit 7, also eine Ausführungsvariante mit zwei Vakuumzylinder 9, 9' und einer Vakuumtrommeleinheit 7. Der erste und zweite Vakuumzylinder 9, 9' unterscheiden sich dabei im Wesentlichen lediglich in ihrer Außenumfangsfläche 9.1, insbesondere kann der Vakuumzylinder 9', einen im Vergleich zum Vakuumzylinder 9 größeren Durchmesser aufweisen und als Transferzylinder ausgebildet sein.

In einer Ausführungsvariante, gezeigt in Figur 3, kann der erste und zweite Vakuumzylinder 9 und 9' mit einer gemeinsamen Vakuumerzeugungseinrichtung, nämlich der zweiten Vakuumerzeugungseinrichtung 30 mit Vakuum beaufschlagt werden und die Vakuumtrommeleinheit 7 mit der ersten Vakuumerzeugungseinrichtung 20. Dabei kann die eine gemeinsame, zweite Vakuumerzeugungseinrichtung 30 über jeweils fluiddichte Verbindungsleitungen 16, 16' mit den beiden Vakuumzylinder 9, 9' verbunden sein und ein gemeinsames Vakuumsystem, nämlich das zweite Vakuumsystem VAK2` ausbilden. In anderen Worten wirken also der erste und zweite Vakuumzylinder 9 und 9' mit der diesen gemeinsamen zweiten Vakuumerzeugungseinrichtung 30 zusammen und bilden so ein zweites Vakuumsystem VAK2` aus. Das erste Vakuumsystem VAK1 wird weiterhin im Wesentlichen von der Vakuumtrommeleinheit 7 sowie der ersten Vakuumerzeugungseinrichtung 20 gebildet.

In einer alternativen Ausführungsvariante dazu, gezeigt in Figur 2, kann auch vorgesehen sein, dass der erste und zweite Vakuumzylinder 9 und 9' mit jeweils einer separaten, eigenen Vakuumerzeugungseinrichtung 30, 60 mit Vakuum beaufschlagt wird. Dabei kann vorgesehen sein, dass die zweite sowie eine dritte Vakuumerzeugungseinrichtung 30, 60 vorgesehen sind, wobei die zweite Vakuumerzeugungseinrichtung 30 zur Bereitstellung von Vakuum an dem ersten Vakuumzylinder 9 und die dritte Vakuumerzeugungseinrichtung 60 zur Bereitstellung von Vakuum am dem zweiten Vakuumzylinder 9' ausgebildet ist.

Dabei kann die zweite Vakuumerzeugungseinrichtung 30 weiterhin über die fluiddichte Verbindungsleitungen 16 mit dem ersten Vakuumzylinder 9 verbunden sein und das zweite Vakuumsystem VAK2, während die dritte Vakuumerzeugungseinrichtung 60 über die fluiddichte Verbindungsleitung 16' mit dem zweiten Vakuumzylinder 9' verbunden ist und damit das dritte Vakuumsystem VAK3 ausbildet.

Insbesondere können die Vakuumerzeugungseinrichtungen 20, 30, 60 als elektrisch angetriebene Vakuumpumpen, beispielsweise als Seitenkanalverdichter, ausgebildet sein. Dabei kann die Vakuum- oder Saugleistung der Vakuumerzeugungseinrichtungen 20, 30, 60 jeweils individuell durch Änderung der Pumpendrehzahl gesteuert und/oder geregelt werden. Die elektrische Ansteuerung des jeweiligen Antriebsmotors der Vakuumerzeugungseinrichtungen 20, 30, 60 kann frequenzgeregelt und/oder -gesteuert über ein Frequenzregelgerät erfolgen. Alternativ kann die elektrische Ansteuerung dann, wenn ein elektrischer Gleichstrommotor verwendet wird, über die elektrische Spannung, bzw. über Veränderungen der elektrischen Spannung erfolgen. Insbesondere erfolgt die Steuerung und/oder Regelung der Vakuumerzeugungseinrichtungen 20, 30, 60 mittels der Steuereinheit 40.

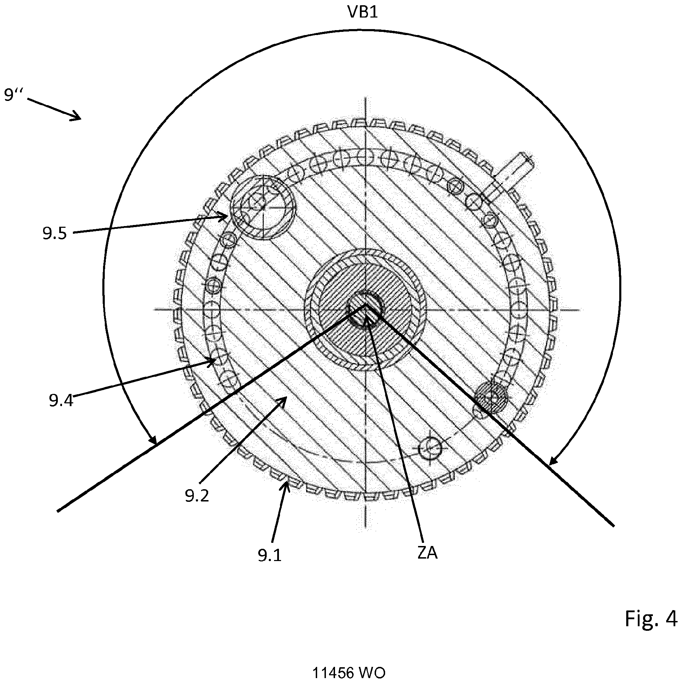

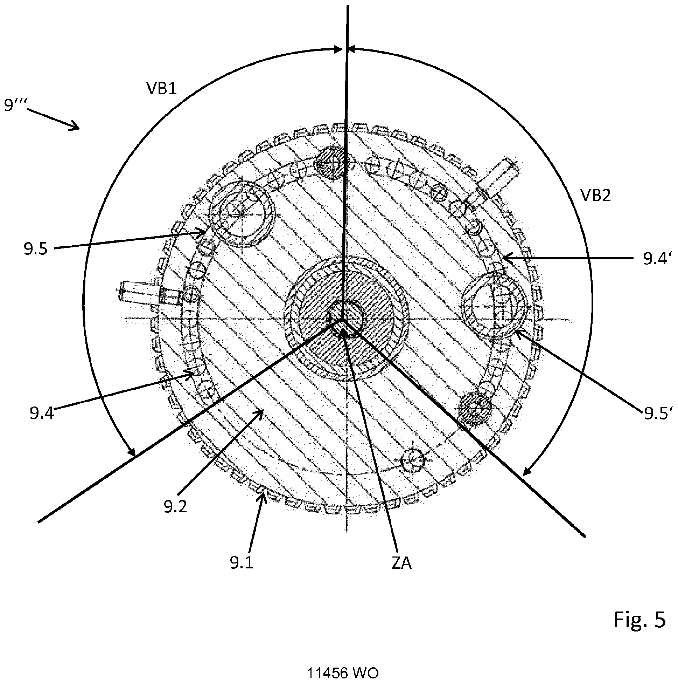

Die Figuren 4 und 5 zeigen jeweils in einer schematischen Schnittdarstellung und in Draufsicht zwei unterschiedliche Ausführungsvarianten eines Vakuumzylinders 9", 9‴. Die beiden Ausführungsvarianten unterscheiden sich dabei im Wesentlichen durch die Anzahl an Vakuumbereichen VB. Dabei weist der Vakuumzylinder 9" der Ausführungsvariante der Figur 4 im Wesentlichen einen Vakuumbereich VB1 und die Ausführungsvariante der Figur 5 zwei Vakuumbereiche VB1, und VB2 auf. Die beiden Vakuumzylinder 9", 9‴ weisen dabei einen sich nicht mitdrehenden, also ortsfesten Innenkörper 9.2 auf, gegenüber dem die Außenmantelfläche 9.1 zentrisch um die Zylinderhochachse ZA relativ dazu drehbar ausgebildet ist. Der Vakuumzylinder 9", 9‴ weist dabei an seiner die Zylinderhochachse ZA kreiszylinderförmig umschließenden Außenmantelfläche 9.1 eine Vielzahl von mit 9.3 nur schematisch angedeuteten Öffnungen auf, die in der Ausführungsvariante der Figur 4 mit einem gemeinsamen Vakuumverteilerkanalsystem 9.4 in Wirkverbindung stehen. Das Vakuumverteilerkanalsystem 9.4 kann über einen Anschlussabschnitt 9.5, an dem die fluiddichte Verbindungsleitung 16, 16' anschließbar ist, mit der jeweiligen Vakuumerzeugungseinrichtung 20, 60 in Wirkverbindung stehen, so dass beim rotativen Überstreichen der in der Außenmantelfläche 9.1 vorgesehenen Öffnungen 9.3 in dem ersten Vakuumbereich VB1 ein erster Unterdruck P1 erzeugbar ist.

Dabei weist der Vakuumzylinder 9‴ der Ausführungsvariante der Figur 5 einen ersten Vakuumbereich VB1 und einen zweiten Vakuumbereich VB2 auf.

Der Vakuumzylinder 9‴ der Ausführungsvariante der Figur 5 weist im Unterschied zur der Ausführungsvariante der Figur 4 ein erstes Vakuumverteilerkanalsystem 9.4 sowie ein zweites Vakuumverteilsystem 9.4' auf, mit dem Drehpositionsabhängig die jeweiligen Öffnungen 9.3 der Außenmantelfläche 9.1 in Wirkverbindung stehen, derart, dass das erste Vakuumverteilerkanalsystem 9.4 den ersten Vakuumbereich VB1, und das zweite Vakuumverteilerkanalsystem 9.4' den zweiten Vakuumbereich VB2 ausbildet.

Mehr im Detail weist das erste Vakuumverteilkanalsystem 9.4 des ersten Vakuumbereichs VB1 einen ersten Anschlussabschnitt 9.5 und das zweite Vakuumverteilkanalsystem 9.4' des zweiten Vakuumbereichs VB2 einen zweiten Anschlussabschnitt 9.5' auf.

Es kann dabei vorgesehen sein, dass an dem ersten und zweiten Anschlussabschnitt 9.5, 9.5' eine gemeinsame Vakuumerzeugungseinrichtung 20, 60 unter Zwischenschaltung der fluiddichten Verbindungsleitungen 16, 16' zur Erzeugung eines Unterdrucks vorgesehen ist, so dass beim rotativen Überstreichen der in der Außenmantelfläche 9.1 vorgesehenen Öffnungen 9.3 sowohl des ersten Vakuumbereichs VB1 als auch des zweiten Vakuumbereichs VB2 ein gemeinsamer erster Unterdruck P1 erzeugbar ist.

Alternativ kann auch vorgesehen sein, dass an dem ersten Anschlussabschnitt 9.5 die zweite Vakuumerzeugungseinrichtung 30 unter Zwischenschaltung der fluiddichten Verbindungsleitungen 16 zur Erzeugung eines ersten Unterdrucks P1 und an dem zweiten Anschlussabschnitt 9.5' die dritte Vakuumerzeugungseinrichtung 60 unter Zwischenschaltung der fluiddichten Verbindungsleitungen 16' zur Erzeugung eines zweiten Unterdrucks P2 vorgesehen ist, so dass beim rotativen Überstreichen der in der Außenmantelfläche 9.1 vorgesehenen Öffnungen 9.3 des ersten Vakuumbereichs VB1 der erster Unterdruck P1 und beim rotativen Überstreichen der in der Außenmantelfläche 9.1 vorgesehenen Öffnungen 9.3 des zweiten Vakuumbereichs VB2 der zweiter Unterdruck P2 erzeugbar ist.

Die Erfindung wurde voranstehend an Ausführungsbeispielen beschrieben. Es versteht sich, dass zahlreiche Änderungen sowie Abwandlungen möglich sind, wobei die Erfindung durch die folgenden Ansprüche definiert ist.

### Bezugszeichenliste

- 1: Vorrichtung
- 2: Behälter
- 4: Rotor
- 5: Drehteller
- 6: Etikettenbandzuführung
- 6.1: Etikettenbandantrieb
- 7: Vakuumtrommeleinheit
- 7.1: Außenmantelfläche
- 7.11: Vakuumhalter
- 7.12: Vakuumhalter
- 8: Etikettenband
- 8.1: Einzeletiketten
- 9, 9', 9", 9‴: Vakuumzylinder
- 9.1: Außenmantelfläche
- 9.2: Innenkörper
- 9.3: Öffnung
- 9.4, 9.4': Vakuumverteilerkanalsystem
- 9.5, 9.5': Anschlussabschnitt
- 10: Schneideinrichtung
- 11: Vorrat
- 15: Verbindungsleitung
- 16, 16': Verbindungsleitung

- 20: erste Vakuumerzeugungseinrichtung
- 21: Drucksensor
- 22: Dreckwinkelgeber
- 30: zweite Vakuumerzeugungseinrichtung
- 31: Drucksensor
- 32: Drehwinkelgeber
- 40: Steuereinheit
- 40.1: Prozesseinheit
- 40.2: Speichereinheit
- 40.3: Schnittstelle
- 42: Steuerleitung

- 60: dritte Vakuumerzeugungseinrichtung

- 70: Leimauftragsvorrichtung

- MA: Maschinenachse
- A: Drehrichtung
- F: Förderrichtung
- ZA: Zylinderhochachse
- TA: Trommelhochachse
- VAK1: erstes Vakuumsystem
- VAK2: zweites Vakuumsystem
- VAK3: drittes Vakuumsystem
- VB1: erster Vakuumbereich
- VB2: zweiter Vakuumbereich
- P1: erster Unterdruck
- P2: zweiter Unterdruck

- STR: Steuerroutine
- SD: Steuerungsdaten
- ISD1; ISD2: Ist-Steuerdaten
- IDZ1, IDZ2: Ist-Drehzahl
- ID1, ID2: Ist-Druckwert
- IDG1, IDG2: Ist-Drehgeschwindigkeit
- SSD1, SSD2: Soll-Steuerungsdaten
- SDZ1, SDZ2: Soll-Drehzahl
- SDR1, SDR2: Soll-Drehrichtung
- SDG1, SDG2: Soll-Drehgeschwindigkeit
- SD1, SD2: Soll-Druckwert

## Patentansprüche

1. Vorrichtung zur Etikettierung von Behältern (2), umfassend eine Etikettenbandzuführung (6) und zumindest eine Vakuumtrommeleinheit (7), bei der die Etikettenbandzuführung (6) zur Zuführung zumindest eines eine Vielzahl von Einzeletiketten (8.1) aufweisenden Etikettenbandes (8) an die zumindest eine Vakuumtrommeleinheit (7) ausgebildet ist, wobei die Etikettenbandzuführung (6) zumindest einen ersten um eine Zylinderhochachse (ZA) rotierenden Vakuumzylinder (9, 9', 9", 9‴) aufweist, an dessen Außenmantelfläche (9.1) zumindest teilumfänglich eine Teillänge des Etikettenbandes (8) zur Anlage gelangt und dort unter Beaufschlagung mittels eines Vakuums gehalten wird, und wobei die Etikettenbandzuführung (6) zumindest eine Schneideinrichtung (10) zum Vereinzeln des Etikettenbandes (8) in Einzeletiketten (8.1) aufweist, wobei die zumindest eine Vakuumtrommeleinheit (7) zum Aufnehmen der vom ersten Vakuumzylinder (9, 9', 9", 9‴) bereitgestellten Einzeletiketten (8.1), zum Halten der aufgenommenen Einzeletiketten (8.1) an einer Außenmantelfläche (7.1) der Vakuumtrommeleinheit (7) und zum Transport dessen in Förderrichtung (F) jeweils durch Beaufschlagung mittels Vakuum ausgebildet ist, und wobei zumindest eine erste und zweite Vakuumerzeugungseinrichtung (20, 30) vorgesehen sind, wobei die erste Vakuumerzeugungseinrichtung (20) zur Bereitstellung von Vakuum zumindest an der Vakuumtrommeleinheit (7) und die zweite Vakuumerzeugungseinrichtung (30) zur Bereitstellung von Vakuum zumindest an dem ersten Vakuumzylinders (9, 9', 9", 9‴) ausgebildet ist, **dadurch gekennzeichnet, dass** der wenigstens eine Vakuumzylinder (9, 9', 9", 9‴) an seiner rotierenden Außenmantelfläche (9.1) drehwinkelabhängig einen ersten Vakuumbereich (VB1) sowie zumindest einen davon getrennten zweiten Vakuumbereich (VB2) ausbildet und dass der erste Vakuumbereich (VAK1) zur Beaufschlagung mit einem ersten Unterdruck (P1) und der zweite Vakuumbereich (VAK2) zur Beaufschlagung mit einem zum ersten Unterdruck (P1) unterschiedlichen zweiten Unterdruck (P2) ausgebildet ist, und dass der erste Vakuumbereich (VB1) mit der zweiten Vakuumerzeugungseinrichtung (30) und der zweite Vakuumbereich (VB2) mit einer dritten Vakuumerzeugungseinrichtung (60) mit Vakuum beaufschlagbar ist.

2. Vorrichtung nach Anspruch 1, **dadurch gekennzeichnet, dass** die erste und zweite Vakuumerzeugungseinrichtung (20, 30) unabhängig voneinander betreibbar sind.

3. Vorrichtung nach Anspruch 1 oder 2, **dadurch gekennzeichnet, dass** die Vakuumtrommeleinheit (7) wenigstens zwei, an der Vakuumtrommeleinheit (7) um eine Trommelhochachse (TA) versetzt vorgesehene und um die Trommelhochachse (TA) rotierbare Vakuumhalter (7.11, 7.12) aufweist, an denen die abgetrennten Einzeletiketten (8.1) mittels des Vakuums gehalten werden.

4. Vorrichtung nach einem der vorhergehenden Ansprüche, **dadurch gekennzeichnet, dass** die erste Vakuumerzeugungseinrichtung (20) mit der zumindest einen Trommeleinheit ein erstes Vakuumsystem (VAK1) und der zumindest eine Vakuumzylinder (7) mit der wenigstens einen zweiten Vakuumerzeugungseinrichtung (30) ein zweites Vakuumsystem (VAK2) ausbildet.

5. Vorrichtung nach einem der vorhergehenden Ansprüche, **dadurch gekennzeichnet, dass** das erste und zweite Vakuumsystem (VAK1, VAK2) unabhängig voneinander und/oder auf einem jeweils unterschiedlichen Unterdruckniveau zueinander mittels einer gemeinsamen Steuereinheit (40) steuer- und/oder regelbar ausgebildet ist.

6. Vorrichtung nach einem der vorhergehenden Ansprüche, **dadurch gekennzeichnet, dass** das erste Vakuumsystem (VAK1) wenigstens einen Drucksensor (21) und/oder das zweite Vakuumsystem (VAK2) wenigstens einen Drucksensor (31) aufweist.

7. Vorrichtung nach einem der vorhergehenden Ansprüche, **dadurch gekennzeichnet, dass** der wenigstens eine Vakuumzylinder (9, 9', 9", 9‴) des ersten Vakuumsystems (VAK1) wenigstens einen Drehwinkelgeber (32) und/oder die wenigstens eine Vakuumtrommeleinheit (7) des ersten Vakuumsystems (VAK1) einen Drehwinkelgeber (22) aufweist.

8. Vorrichtung nach einem der vorhergehenden Ansprüche 5 bis 7, **dadurch gekennzeichnet, dass** eine in der Steuereinheit (40) vorgesehene Prozesseinheit (40.1) dazu eingerichtet sein, Ist-Steuerdaten (ISD) aus der Drehzahl und/oder der Drehrichtung und/oder der Drehgeschwindigkeit und/oder erfassten Ist-Druckwert, in dem wenigstens einen ersten und zweiten Vakuumsystem (VAK1, VAK2) zu ermitteln, um daraus abgeleitet die erste und/oder zweite Vakuumerzeugungseinrichtung (20, 30) mit der erforderlichen Vakuum- oder Saugleistung zu betreiben.

9. Vorrichtung nach einem der vorhergehenden Ansprüche, **dadurch gekennzeichnet, dass** der erste sowie zumindest ein zweiter Vakuumzylinder (9, 9', 9", 9‴) vorgesehen ist, die mit einer gemeinsamen zweiten Vakuumerzeugungseinrichtung (30) mit Vakuum beaufschlagbar sind, derart, dass der erste sowie der zumindest eine zweiter Vakuumzylinder (9, 9', 9", 9‴) das zweite Vakuumsystem (VAK2) ausbilden.

10. Vorrichtung nach Anspruch 9, **dadurch gekennzeichnet, dass** der erste sowie der zumindest eine zweite Vakuumzylinder (9, 9', 9", 9‴) jeweils mit einer separaten Vakuumerzeugungseinrichtung (30, 60) mit Vakuum beaufschlagbar ist, derart, dass der erste Vakuumzylinder (9, 9', 9", 9‴) das zweite Vakuumsystem (VAK2) und der wenigstens eine dritte Vakuumzylinder (9, 9', 9", 9‴) ein drittes Vakuumsystem (VAK3) ausbildet.

11. Vorrichtung nach einem der vorhergehenden Ansprüche, **dadurch gekennzeichnet, dass** die zumindest eine erste und/oder zweite Vakuumerzeugungseinrichtung (20, 30, 60) als elektrisch angetriebene Vakuumpumpe, insbesondere Seitenkanalverdichter, ausgebildet ist.

12. Vorrichtung nach einem der vorhergehenden Ansprüche, **dadurch gekennzeichnet, dass** der wenigstens eine Vakuumzylinder (9, 9', 9", 9‴) an seiner rotierenden Außenmantelfläche (9.1) drehwinkelabhängig zumindest einen ersten Vakuumbereich (VB1) zur Beaufschlagung mit wenigstens einem ersten Unterdruck (P1) ausbildet.

## Claims

1. Device for labelling containers (2), comprising a label strip feed unit (6) and at least one vacuum drum unit (7), wherein the label strip feed unit (6) is designed to feed at least one label strip (8) comprising multiple individual labels (8.1) to the at least one vacuum drum unit (7), wherein the label strip feed unit (6) comprises at least one first vacuum cylinder (9, 9', 9", 9‴) rotating about a cylinder vertical axis (ZA), on the outer lateral surface (9.1) of which a partial length of the label strip (8) comes to rest at least over part of its circumference and is held there under the action of a vacuum, and wherein the label strip feed unit (6) comprises at least one cutting device (10) for separating the label strip (8) into individual labels (8.1), wherein the at least one vacuum drum unit (7) is designed to receive the individual labels (8.1) provided from the first vacuum cylinder (9, 9', 9", 9‴), to hold the received individual labels (8.1) on an outer lateral surface (7.1) of the vacuum drum unit (7), and to transport them in the conveying direction (F), in each case by application of a vacuum, and wherein at least one first and second vacuum-generating apparatus (20, 30) are provided, wherein the first vacuum-generating apparatus (20) is designed to provide a vacuum at least at the vacuum drum unit (7) and the second vacuum-generating apparatus (30) is designed to provide a vacuum at least at the first vacuum cylinder (9, 9', 9", 9‴), **characterised in that** the at least one vacuum cylinder (9, 9', 9", 9‴) forms at its rotating outer lateral surface (9.1), depending on the angle of rotation, a first vacuum region (VB1), as well as at least one second vacuum region (VB2) separate from the first, and that the first vacuum region (VAK1) is designed for imposing a first negative pressure (P1) and the second vacuum region (VAK2) is designed for imposing a second negative pressure (P2), different from the first negative pressure (P1), and that the first vacuum region (VB1) can be subjected to vacuum with the second vacuum-generating apparatus (30), and the second vacuum region (VB2) can be subjected to vacuum with a third vacuum-generating device (60).

2. Device according to claim 1, **characterised in that** the first and second vacuum-generating devices (20, 30) can be operated independently of one another.

3. Device according to claim 1 or 2, **characterised in that** the vacuum drum unit (7) comprises at least two vacuum holders (7.11, 7.12), provided offset about a drum vertical axis (TA) at the vacuum drum unit (7) and which can be rotated about the drum vertical axis (TA), to which the separated individual labels (8.1) are held by means of the vacuum.

4. Device according to any one of the preceding claims, **characterised in that** the first vacuum-generating device (20) with the at least one drum unit forms a first vacuum system (VAK1) and the at least one vacuum cylinder (7) with the at least one second vacuum-generating device (30) forms a second vacuum system (VAK2).

5. Device according to any one of the preceding claims, **characterised in that** the first and second vacuum systems (VAK1, VAK2) are designed such as to be controlled and/or regulated independently of one another, and/or at a respectively different negative pressure level from one another, by means of a common control unit (40).

6. Device according to any one of the preceding claims, **characterised in that** the first vacuum system (VAK1) comprises at least one pressure sensor (21) and/or the second vacuum system (VAK2) comprises at least one pressure sensor (31).

7. Device according to any one of the preceding claims, **characterised in that** the at least one vacuum cylinder (9, 9', 9", 9‴) of the first vacuum system (VAK1) comprises at least one rotary angle encoder (32) and/or the at least one vacuum drum unit (7) of the first vacuum system (VAK1) comprises a rotary angle encoder (22).

8. Device according to any one of the preceding claims 5 to 7, **characterised in that** a process unit (40.1) provided in the control unit (40), which is designed such as to determine actual control data (ISD) from the revolution speed and/or the direction of rotation and/or the speed of rotation and/or the actual pressure value determined, in the at least one first and second vacuum system (VAK1, VAK2), in order, deriving from this, to operate the first and/or second vacuum-generating device (20, 30) at the required vacuum or suction capacity.

9. Device according to any one of the preceding claims, **characterised in that** the first and at least one second vacuum cylinder (9, 9', 9", 9‴) are provided, which can be subjected to vacuum by a common second vacuum-generating device (30), in such a way that the first and the at least one second vacuum cylinder (9, 9', 9", 9‴) form the second vacuum system (VAK2).

10. Device according to claim 9, **characterised in that** the first and the at least one second vacuum cylinder (9, 9', 9", 9‴) can in each case be subjected to vacuum by a separate vacuum-generating device (30, 60) in such a way that the first vacuum cylinder (9, 9', 9", 9‴), the second vacuum system (VAK2), and the at least one third vacuum cylinder (9, 9', 9", 9‴), form a third vacuum system (VAK3).

11. Device according to any one of the preceding claims, **characterised in that** the at least one first and/or second vacuum-generating device (20, 30, 60) are configured as electrically-driven vacuum pumps, in particular side-channel compressors.

12. Device according to any one of the preceding claims, **characterised in that** the at least one vacuum cylinder (9, 9', 9", 9‴) forms at its rotating outer lateral surface (9.1), depending on the angle of rotation, at least one first vacuum region (VB1) for imposing at least one first negative pressure (P1).

## Revendications

1. Dispositif d'étiquetage de récipients (2) comprenant un système d'amenée de bande d'étiquettes (6) et au moins une unité de tambour sous vide (7), pour lequel le système d'amenée de bande d'étiquettes (6) est réalisé pour l'amenée au moins d'une bande d'étiquettes (8) présentant une pluralité d'étiquettes individuelles (8.1) à l'au moins une unité de tambour sous vide (7), dans lequel le système d'amenée de bande d'étiquettes (6) présente au moins un premier cylindre sous vide (9, 9', 9", 9‴) rotatif autour d'un axe vertical de cylindre (ZA), au niveau de la surface enveloppe extérieure (9.1) duquel une longueur partielle de la bande d'étiquettes (8) parvient en appui au moins sur la périphérie partielle et y est maintenue par alimentation au moyen d'un vide, et dans lequel le système d'amenée de bande d'étiquettes (6) présente au moins un dispositif de découpe (10) pour la séparation de la bande d'étiquettes (8) en étiquettes individuelles (8.1), dans lequel l'au moins une unité de tambour sous vide (7) est réalisée pour la réception des étiquettes individuelles (8.1) fournies par le premier cylindre sous vide (9, 9', 9", 9‴), pour le maintien des étiquettes individuelles (8.1) reçues au niveau d'une surface enveloppe extérieure (7.1) de l'unité de tambour sous vide (7) et pour le transport duquel dans le sens de transport (F) respectivement par alimentation au moyen du vide, et dans lequel au moins un premier et un deuxième dispositif de production de vide (20, 30) sont prévus, dans lequel le premier dispositif de production de vide (20) est réalisé pour la fourniture de vide au moins au niveau de l'unité de tambour de vide (7) et le deuxième dispositif de production de vide (30) pour la fourniture de vide au moins au niveau du premier cylindre sous vide (9, 9', 9", 9‴), **caractérisé en ce que** l'au moins un cylindre sous vide (9, 9', 9", 9‴) réalise au niveau de sa surface enveloppe extérieure (9.1) rotative selon l'angle de rotation une première zone de vide (VB1) ainsi qu'au moins une seconde zone de vide (VB2) séparée de celle-ci et **en ce que** la première zone de vide (VAK1) est réalisée pour l'alimentation en une première dépression (P1) et la seconde zone de vide (VAK2) pour l'alimentation en une seconde dépression (P2) différente de la première dépression (P1), et **en ce que** la première zone de vide (VB1) peut être alimentée en vide avec le deuxième dispositif de production de vide (30) et la seconde zone de vide (VB2) avec un troisième dispositif de production de vide (60).

2. Dispositif selon la revendication 1, **caractérisé en ce que** le premier et le deuxième dispositif de production de vide (20, 30) peuvent fonctionner indépendamment l'un de l'autre.

3. Dispositif selon la revendication 1 ou 2, **caractérisé en ce que** l'unité de tambour sous vide (7) présente au moins deux supports de vide (7.11, 7.12) prévus en déport au niveau de l'unité de tambour sous vide (7) d'un axe vertical de tambour (TA) et rotatifs autour de l'axe vertical de tambour (TA), au niveau desquels les étiquettes individuelles (8.1) séparées sont maintenues au moyen du vide.

4. Dispositif selon l'une quelconque des revendications précédentes, **caractérisé en ce que** le premier dispositif de production de vide (20) réalise avec l'au moins une unité de tambour un premier système de vide (VAK1) et l'au moins un cylindre sous vide (7) réalise avec l'au moins un deuxième dispositif de production de vide (30) un deuxième système de vide (VAK2).

5. Dispositif selon l'une quelconque des revendications précédentes, **caractérisé en ce que** le premier et le deuxième système de vide (VAK1, VAK2) sont réalisés de manière commandable et/ou régulable indépendamment l'un de l'autre et/ou à un niveau de dépression respectivement différent l'un par rapport à l'autre au moyen d'une unité de commande (40) commune.

6. Dispositif selon l'une quelconque des revendications précédentes, **caractérisé en ce que** le premier système de vide (VAK1) présente au moins un capteur de pression (21) et/ou le deuxième système de vide (VAK2) présente au moins un capteur de pression (31).

7. Dispositif selon l'une quelconque des revendications précédentes, **caractérisé en ce que** l'au moins un cylindre sous vide (9, 9', 9", 9‴) du premier système de vide (VAK1) présente au moins un capteur d'angle de rotation (32) et/ou l'au moins une unité de tambour sous vide (7) du premier système de vide (VAK1) présente un capteur d'angle de rotation (22).

8. Dispositif selon l'une quelconque des revendications précédentes 5 à 7, **caractérisé en ce qu'**une unité de processus (40.1) prévue dans l'unité de commande (40) est conçue afin de déterminer des données de commande réelles (ISD) à partir de la vitesse de rotation et/ou du sens de rotation et/ou de la vitesse de rotation et/ou la valeur de pression réelle détectée, dans l'au moins un premier et deuxième système de vide (VAK1, VAK2) afin de faire fonctionner en déduction le premier et/ou deuxième dispositif de production de vide (20, 30) avec la puissance de vide ou d'aspiration nécessaire.

9. Dispositif selon l'une quelconque des revendications précédentes, **caractérisé en ce que** le premier ainsi qu'au moins un deuxième cylindre sous vide (9, 9', 9", 9‴) sont prévus, lesquels peuvent être alimentés en vide avec un deuxième dispositif de production de vide (30) commun de telle manière que le premier ainsi que l'au moins un deuxième cylindre sous vide (9, 9', 9", 9‴) réalisent le deuxième système de vide (VAK2).

10. Dispositif selon la revendication 9, **caractérisé en ce que** le premier ainsi que l'au moins un deuxième cylindre sous vide (9, 9', 9", 9‴) peuvent être alimentés en vide respectivement avec un dispositif de production de vide (30, 60) séparé de telle manière que le premier cylindre sous vide (9, 9', 9", 9‴) réalise le deuxième système de vide (VAK2) et l'au moins un troisième cylindre sous vide (9, 9', 9", 9‴) réalise un troisième système de vide (VAK3).

11. Dispositif selon l'une quelconque des revendications précédentes, **caractérisé en ce que** l'au moins un premier et/ou deuxième dispositif de production de vide (20, 30, 60) est réalisé comme pompe à vide entraînée par voie électrique, en particulier compresseur à canal latéral.

12. Dispositif selon l'une quelconque des revendications précédentes, **caractérisé en ce que** l'au moins un cylindre sous vide (9, 9', 9", 9‴) réalise au niveau de sa surface enveloppe extérieure (9.1) rotative selon l'angle de rotation au moins une première zone de vide (VB1) pour l'alimentation en au moins une première dépression (P1).
